Europäisches Patentamt

European Patent Office

Office européen des brevets

(19)

(11) Veröffentlichungsnummer : **0 008 085**
**B1**

# (12) EUROPÄISCHE PATENTSCHRIFT

(45) Veröffentlichungstag der Patentschrift :
**30.09.81**

(21) Anmeldenummer : 79102781.6

(22) Anmeldetag : 02.08.79

(51) Int. Cl.³ : **F 16 B 13/06**

(54) **Ankerbolzen.**

(30) Priorität : **04.08.78 DE 2834241**

(43) Veröffentlichungstag der Anmeldung :
**20.02.80 (Patentblatt 80/04)**

(45) Bekanntmachung des Hinweises auf die Patenterteilung : **30.09.81 Patentblatt 81/39**

(84) Benannte Vertragsstaaten :
**AT BE CH DE FR GB IT LU NL SE**

(56) Entgegenhaltungen :
CH - A - 302 654
CH - A - 434 885
CH - A5 - 569 157
DE - A - 2 103 640
DE - C - 65 940
DE - A1 - 2 733 612
FR - A - 2 218 495
GB - A - 1 447 021
US - A - 3 304 828
US - A - 3 750 519
US - A - 3 851 560

(73) Patentinhaber : **Hainke, Volker**
**Lilienthalstrasse 16**
**D-4800 Bielefeld 11 (DE)**

(72) Erfinder : **Hainke, Hans Ulrich**
**Lilienthalstrasse 16**
**D-4800 Bielefeld 11 (DE)**
Erfinder : **Hainke, Volker**
**Lilienthalstrasse 16**
**D-4800 Bielefeld 11 (DE)**

(74) Vertreter : **Patentanwälte Ter Meer-Müller-Stein-**
**meister**
**Artur-Ladebeck-Strasse 51**
**D-4800 Bielefeld 1 (DE)**

## Ankerbolzen

Die Erfindung betrifft einen Ankerbolzen zur Verankerung in einer Bohrung, mit einem Spannbolzen, der einen Gewindeabschnitt und einen von diesem aus kegelförmig erweiterten Kopfabschnitt aufweist, sowie mit einer Hülse mit einem Innengewindeabschnitt und einem angrenzenden, sektorförmig spreizbaren Verankerungsabschnitt.

Derartige Ankerbolzen sind bekannt. Sie weisen eine Hülse auf, deren Verankerungsabschnitt einen mit achsparallelen Schlitzen versehenen Hohlzylinder mit kreisförmigem Querschnitt darstellt. Der Gewindeabschnitt des Spannbolzens wird von der Seite des Verankerungsabschnitts her in das Innengewinde der Hülse eingeschraubt, und beide werden als Einheit in eine Bohrung eingeführt. Sodann wird der Spannbolzen weiter gedreht, bis er mit seinem kegelförmigen Kopfabschnitt den spreizbaren Verankerungsabschnitt der Hülse auseinanderdrückt und die Hülse damit in dem umgebenden Material, wie etwa Holz, Spanplatten oder Beton verankert.

Der Nachteil des erwähnten herkömmlichen Ankerbolzens besteht darin, daß die Gefahr besteht, daß sich die Hülse beim Anziehen des Spannbolzens in der Bohrung mitdreht, so daß die Hülse nicht gespreizt werden kann und damit nicht verankert wird.

Es ist nun versucht worden (CH-A-569 157), die Oberfläche der Hülse mit einer Riffelung zu versehen, jedoch hat auch diese Riffelung nicht immer zu dem gewünschten Erfolg geführt.

Im übrigen hat eine im Querschnitt kreisförmige Hülse den Nachteil, daß die gespreizten, kreisbogenförmigen Segmente nur in geringem Maße scharfe Ecken und Kanten zur Verankerung im Material aufweisen.

Aus der DE-PS 65 940 ist ein Befestigungsbolzen bekannt, an dessen vorderem Ende ein nach vorne erweiterter konischer Abschnitt vorgesehen ist und der insgesamt durch eine Anzahl von langgestreckten Platten umgeben ist, die durch einen Drahtring am rückwärtigen Ende des Bolzens zusammengehalten sind. Beim Anziehen des Bolzens mit Hilfe einer Mutter verschiebt sich der Bolzen nach rückwärts, so daß die Platten am vorderen Ende durch den konischen Abschnitt auseinandergedrückt und dadurch in dem zugehörigen Bohrloch verankert werden. Die Platten weisen insgesamt betrachtet einen als polygonal zu bezeichnenden Umriß auf.

Diese Lösung erscheint schon deshalb als ungünstig, als es erforderlich ist, eine Anzahl von beispielsweise fünf oder sogar mehr Platten um den Bolzen herum zusammenzufügen und mit Hilfe eines Drahtes festzulegen. Der für diesen Montagevorgang erforderliche Arbeitsaufwand dürfte zu kaum vertretbaren Herstellungskosten führen. Im übrigen besteht die Gefahr, daß sich die einzelnen Platten bei Lagerung und Transport wieder von dem Bolzen lösen. Ein weterer grundsätzlicher Nachteil besteht darin, daß die Platten am vorderen Ende des Bolzens auseinandergedrückt werden, so daß sie in dem Bohrloch zwar verklemmt, aber nicht zuverlässig entgegen der Auszugsrichtung verankert werden können.

Der Erfindung liegt daher die Aufgabe zugrunde, einen Ankerbolzen des Gattungsbegriffes derart auszubilden, daß er eine sofortige, sichere und dauerhafte Verankerung im Material gestattet.

Diese Aufgabe wird bei einem Ankerbolzen der eingangs genannten Art dadurch gelöst, daß die Hülse einen polygonalen Querschnitt aufweist und im Mittelbereich der Seiten des Polygonals mit achsparallelen, vorgeschwächten Spreizlinien versehen ist.

Der polygonale, insbesondere sechseckige Querchnitt der Hülse verhindert zuverlässig ein Mitdrehen der Hülse beim Spannen des Spannbolzens. Im übrigen ergibt sich durch die polygonale Querschnittsform auf der spreizbaren Seite der Hülse eine Anzahl von zusätzlichen scharfen Ecken, die den Eintritt in das Material und die Verriegelung im Material erleichtern.

Entsprechend einer bevorzugten Ausführungsform weist die Hülse in ihrem spreizbaren Verankerungsabschnitt, ausgehend von dem Gewindeabschnitt eine flache, kegelförmige Erweiterung auf, die mit dem kegelförmigen Kopfabschnitt des Spannbolzens zusammenwirkt. Beide Kegelflächen zusammen ermöglichen eine weiche, gleichmäßige Spreizung der Hülse mit geringem Kraftaufwand, so daß auch dadurch die Gefahr verringert wird, daß die Hülse beim Drehen des Spannbolzens mitgedreht oder herausgezogen wird, bevor es zu einer Verankerung kommen kann.

Die vorgeschwächten Spreizlinien sind vorzugsweise durch Nuten gebildet, die einen V-förmigen Querschnitt haben können. Es ist zweckmäßig, die Tiefe der Nuten und den Verlauf der kegelförmigen Erweiterung im Inneren des Verankerungsabschnitts der Hülse derart aufeinander abzustimmen, daß beide am freien Rand der Hülse im wesentlichen zusammentreffen, so daß dort ein sofortiges Aufreißen und Spreizen der Hülse möglich ist.

Der Spannbolzen, der als solcher bekannt ist, kann derart ausgebildet sein, daß der kegelförmig erweiterte Kopfabschnitt einen glatten zylindrischen Schaft darstellt, an dessen Ende eine Erweiterung in der Form eines Schlitzschrauben- oder Innensechskantschraubenkopfes vorgesehen ist.

Die Hülse kann aus verschiedenen Kunststoffen oder Metallen bestehen und insbesondere auch als Aluminium-Spritzgußteil hergestellt sein.

Weitere Einzelheiten der Erfindung ergeben sich aus den Unteransprüchen.

Im folgenden werden bevorzugte Ausführungsbeispiele der Erfindung anhand der beigefügten Zeichnung näher erläutert.

Fig. 1 ist eine Teilschnittdarstellung einer Anordnung aus Spannbolzen und Hülse vor der Montage ;

Fig. 2 ist eine vergrößerte Ansicht auf die Hülse entsprechend der Linie 2-2 in Fig. 1 ;

Fig. 3 ist ein Teilschnitt des Ankerbolzens während des Verspannens ;

Fig. 4 ist eine Ansicht entsprechend der Linie 4-4 in Fig. 3.

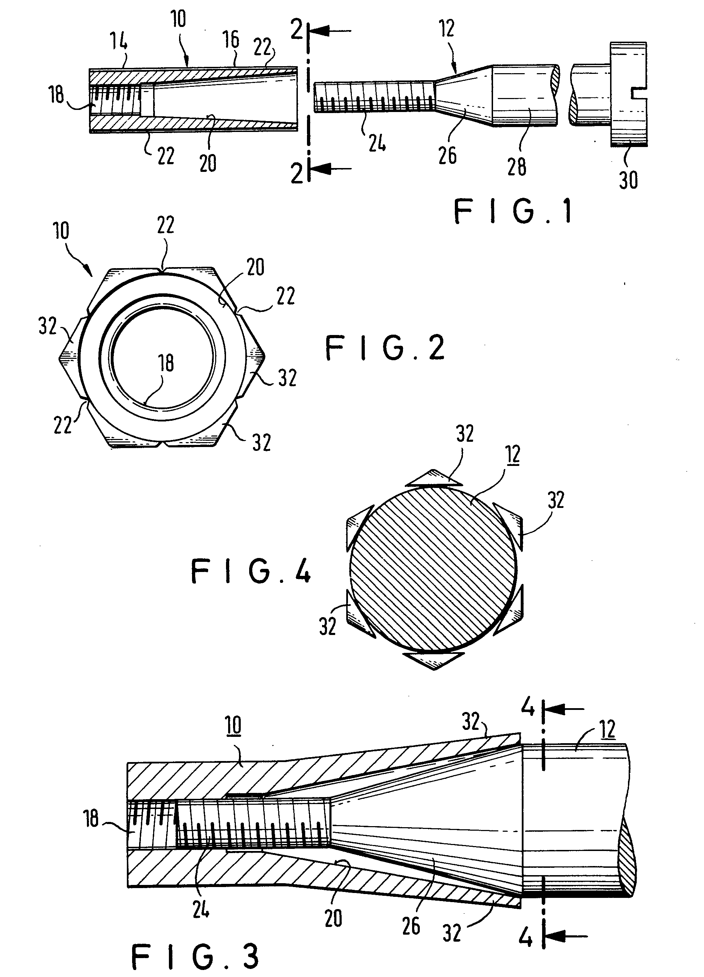

In Fig. 1 ist eine Hülse mit 10 und ein Spannbolzen mit 12 bezeichnet. Die Hülse besteht in Längsrichtung aus zwei Abschnitten, die als Innengewindeabschnitt 14 links in Fig. 1 und als spreizbarer Verankerungsabschnitt 16 rechts in Fig. 1 bezeichnet sind. Der Innengewindeabschnitt 14 weist eine konzentrische, axiale Bohrung 18 mit Innengewinde auf. Der Verankerungsabschnitt 16 ist im Inneren mit einer Bohrung 20 versehen, die sich zum freien Ende nach rechts in Fig. 1 kegelförmig erweitert. Der Kegelwinkel dieser Bohrung 20 ist verhältnismäßig klein und kann beispielsweise 3 bis 4°, bezogen auf die Längsmittellinie der Hülse betragen. Wie aus Fig. 2 hervorgeht, ist der Umfang der Hülse 10 im Querschnitt sechseckig. In den Längsmittellinien der sechs Ebenen, die Hülse nach außen begrenzenden Flächen sind Nuten 22 vorgesehen, die beispielsweise einen V-förmigen Querschnitt haben können.

Die Erweiterung der Bohrung 20 und die Tiefe der Nuten 22 sind derart aufeinander abgestimmt, daß sie am rechten Ende der Hülse in Fig. 1 im wesentlichen zusammentreffen oder allenfalls durch eine sehr geringe Materialstärke getrennt sind, die ohne weiteres unterbrochen werden kann.

Der rechts in Fig. 1 gezeigte Spannbolzen umfaßt einen mit Außengewinde versehenen Gewindeabschnitt 24 und einen an diesen angrenzenden, kegelstumpfförmigen Kopfabschnitt 26. Das Außengewinde des Gewindeabschnitts 24 entspricht dem Innengewinde der Bohrung 18. Der kegelstumpfförmige Kopfabschnitt 26 muß nicht notwendigerweise eine exakte Kegelfläche aufweisen, sondern kann auch in anderer Weise abgeschrägt oder abgerundet sein. Der Kopfabschnitt 26 leitet im dargestellten Beispiel über in einen zylindrischen Schaft 28 beliebiger Länge und einen an diesen angrenzenden Kopf 30 zum Ansetzen eines Schraubenziehers oder Innensechskantschlüssels. Anstelle des Schaftes und der Kopfes 30 können jedoch andere Elemente vorgesehen sein, die ein Drehen und ein Abstützen des Spannbolzens 12 nach links in Fig. 1 gestatten.

Bei der Montage des erfindungsgemäßen Ankerbolzens wird zunächst der Gewindeabschnitt 24 durch den Verankerungsabschnitt 16 hindurchgeführt und in die Bohrung 18 eingeschraubt, bis beispielsweise der kegelförmige Kopfabschnitt 12 lose gegen das rechte Ende der Hülse anliegt. In dieser Stellung werden die Hülse und der Spannbolzen als Einheit in eine Bohrung eingeführt, bei der es sich beispielsweise um eine Bohrung in einer Betonwand oder in Bauteilen aus Holz oder Spanplatten handeln kann. Kastenförmige Möbel können beispielsweise montiert werden, indem jeweils in einer Platte von den Kanten her Sacklöcher hergestellt und in zugeordneten Positionen rechtwinklig angrenzender Platten Bohrungen mit einer Senkung für den Kopf 30 gebohrt werden. Diese Montagemöglichkeiten sind für sich bekannt und sollen daher nicht näher dargestellt werden.

Die Einheit aus Hülse 10 und Spannbolzen 12 wird in die Bohrung eingeführt, bis der Kopf 30 gegen eine geeignete Anlage, beispielsweise den Boden einer Senkbohrung anliegt. Wenn der Spannbolzen 12 in dieser Stellung weiter gedreht wird, wird die Hülse 10 aufgrund des Gewindeeingriffs zwischen dem Gewindeabschnitt 24 und der Bohrung 18 herangezogen und dabei zugleich gespreizt, wie in Fig. 3 gezeigt ist. Bei dieser Spreizung reißt der Verankerungsabschnitt 16 im Bereich der Nuten 22 (Fig. 2) in einzelne Segmente 32 (Fig. 2) auf. Diese Segmente dringen zunehmend in das Material der angrenzenden Wand der Bohrung ein, so daß die Hülse in der Bohrung verankert wird. Dabei ergibt sich im wesentlichen die Stellung der Fig. 4.

Die erfindungsgemäße Querschnittsform der Hülse 10 hat nicht nur den Vorteil, daß ein Mitdrehen der Hülse während des Spannvorganges ausgeschlossen wird. Vielmehr geht aus Fig. 4 hervor, daß die einzelnen Segmente 32 eine größere Anzahl von scharfen Ecken bilden, als es etwa bei zylindrischen, spreizbaren Hülsen der Fall ist. Diese scharfen Ecken erleichtern das Eindringen in das Material der Bohrungswand und damit die Verankerung der Hülse.

Der erfindungsgemäße Ankerbolzen ermöglicht beispielsweise eine Eckenverbindung von kastenförmigen Möbelstücken, ohne daß Beschlagteile auf der Außenfläche der einzelnen Platten sichtbar werden, ausgenommen der in eine Senkbohrung eingelassene Kopf 30, der jedoch sogar u.U. als dekoratives Element ausgenutzt werden kann.

Nach der Verankerung erreicht die Hülse 10 einen festen Sitz in der zugehörigen Bohrung, der auch erhalten bleibt, wenn der Spannbolzen 12 zum Lösen der Verbindung herausgedreht und ggf. anschließend wieder eingeschraubt wird.

**Ansprüche**

1. Ankerbolzen zur Verankerung in einer Bohrung, mit einem Spannbolzen, der einen Gewindeabschnitt und einen von diesem aus kegelförmig erweiterten Kopfabschnitt aufweist, sowie einer Hülse mit einem Innengewindeabschnitt und einem angrenzenden, sektorförmig spreizbaren Verankerungsabschnitt, dadurch gekennzeichnet, daß die Hülse (10) einen polygonalen Querschnitt aufweist und im Mittelbereich der Seiten des Polygonals mit achsparallelen, vorgeschwächten Spreizlinien (22) versehen ist.

2. Ankerbolzen nach Anspruch 1, dadurch gekennzeichnet, daß die Hülse (10) im Inneren, ausgehend von dem Innengewindeabschnitt (14), mit flachem Kegelwinkel erweitert ist.

3. Ankerbolzen nach Anspruch 1 oder 2, dadurch gekennzeichnet, daß der Querschnitt der Hülse (10) sechseckig ist.

4. Ankerbolzen nach einem der vorhergehenden Ansprüche, dadurch gekennzeichnet, daß die vorgeschwächten Spreizlinien durch Nuten (22) mit im wesentlichen V-förmigem Querschnitt gebildet sind.

5. Ankerbolzen nach Anspruch 4, dadurch gekennzeichnet, daß die Nuten (22) über die gesamte Länge der Hülse (10) verlaufen.

6. Ankerbolzen nach Anspruch 2 und 5, dadurch gekennzeichnet, daß die kegelförmige Erweiterung im Inneren der Hülse (10) und die Tiefe der Nuten (22) so gewählt sind, daß sie am freien Ende des spreizbaren Verankerungsabschnitts (16) der Hülse im wesentlichen zusammentreffen.

7. Ankerbolzen nach einem der vorhergehenden Ansprüche, dadurch gekennzeichnet, daß die Hülse (10) ein Aluminium-Spritzgußteil ist.

## Claims

1. An anchoring bolt to be anchored in a hole, having a screw for screwing up the bolt tight, said screw having a threaded part and a coned head part becoming thicker in a direction away from the threaded part, and furthermore a sleeve with a female-threaded hole next to an anchoring part able to undergo expansion in sectors, characterized in that the sleeve (10) has a many-sided cross-section and in the middles of such sides has bursting lines (22) which are of decreased strength and are parallel to the anchoring bolt's axis.

2. An anchoring bolt as claimed in claim 1, characterized in that the sleeve (10) becomes wider in size with a small cone angle, starting from the part (14) with the female thread.

3. An anchoring bolt as claimed in claim 1 or claim 2, characterized in that the cross-section of the sleeve (10) is six-sided.

4. An anchoring bolt as claimed in anyone of claims 1 to 3, characterized in that the less strong lines of bursting are formed by grooves (22) generally of V-like cross-section.

5. An anchoring bolt as claimed in claim 4, characterized by the grooves (22) running along the full length of the sleeve (10).

6. An anchoring bolt as claimed in claim 2 and claim 5, characterized in that the ooned part inside the sleeve (10) and the depth of the grooves (22) are such that they come together generally at the free end of the bursting anchoring part (16) of the sleeve.

7. An anchoring bolt as claimed in anyone of claims 1 to 6, characterized in that the sleeve (10) is an aluminum injection casting.

## Revendications

1. Boulon d'ancrage pour l'ancrage dans un orifice, comportant un boulon de serrage présentant un tronçon fileté et un tronçon de tête s'élargissant de façon conique à partir de celui-ci, et une douille comportant un tronçon taraudé et un tronçon d'ancrage adjacent expansible en forme de secteur, caractérisé par le fait que la douille (10) présente une section polygonale et munie dans la zone centrale des côtés du polygone deux lignes d'expansion pré-affaiblies (22) parallèles à l'axe.

2. Boulon d'ancrage selon la revendication 1, caractérisé par le fait que la douille (10) est élargie à l'intérieur, en partant du tronçon taraudé (14), avec un angle de cône faible.

3. Boulon d'ancrage selon la revendication 1 ou 2, caractérisé par le fait que la section de la douille (10) est hexagonale.

4. Boulon d'ancrage selon d'une des revendications précédentes, caractérisé par le fait que les lignes d'expansion pré-affaiblies sont formées par des gorges (22) présentant une section sensiblement en forme de V.

5. Boulon d'ancrage selon la revendication 4, caractérisé par le fait que les gorges (22) s'étendent sur toute la longueur de la douille (10).

6. Boulon d'ancrage selon la revendication 2 et 5, caractérisé par le fait que l'élargissement conique à l'intérieur de la douille (10) et la profondeur des gorges (22) sont choisis de telle sorte qu'ils se rencontrent sensiblement à l'extrémité libre du tronçon d'ancrage expansible (16) de la douille.

7. Boulon d'ancrage selon l'une des revendications précédentes, caractérisé par le fait que la douille (10) est une pièce en aluminium coulée par injection.

F I G . 1

F I G . 2

F I G . 4

F I G . 3